# FASCICULE DE BREVET EUROPEEN

(11) **EP 2 974 911 B1**
(45) Date de publication et mention de la délivrance du brevet: **13.09.2017**
(21) Numéro de dépôt: 15177157.3
(22) Date de dépôt: 16.07.2015
(51) Int. Cl.: B60R 13/02, B29C 44/12

(54) **PANNEAU D'HABILLAGE POUR UN VÉHICULE AUTOMOBILE**
VERKLEIDUNGSPANEEL FÜR EIN KRAFTFAHRZEUG
TRIM PANEL FOR A MOTOR VEHICLE

(30) Priorité: 16.07.2014 FR 1456830
(43) Date de publication de la demande: 20.01.2016
(73) Titulaire: Cera APS, 51100 Reims (FR)
(72) Inventeur: Koopman, Nicolas, 51100 Reims (FR); Gillet, Christophe, 51100 Reims (FR); Huoy, Lim-An, 51100 Reims (FR); Lemaitre, Jacques, 51100 Reims (FR)
(74) Mandataire: Sayettat, Julien Christian

(56) Documents cités:
- DE-A1- 19 652 690
- FR-A1- 2 955 812
- FR-A1- 3 010 687
- US-A- 5 176 860
- US-A1- 2006 127 636

## Description

L'invention concerne un panneau d'habillage pour un véhicule automobile et un procédé de réalisation d'un tel panneau.

Il est connu de réaliser un panneau d'habillage pour un véhicule automobile, ledit panneau comprenant une âme, notamment à base de mousse de polyuréthanne sensiblement rigide, ladite âme présentant une face d'endroit revêtue par un revêtement d'endroit collé et une face d'envers revêtue par un revêtement d'envers collé, lesdites faces étant reliées entre elles par une tranche.

Le document FR2955812 A1 révèle un panneau selon le préambule de la revendication 1. Avec un tel agencement, se pose le problème de disposer d'une finition périphérique satisfaisante, aussi bien en termes d'aspect que de robustesse, notamment dans les coins dudit panneau.

L'invention a pour but de proposer un agencement permettant d'atteindre ces objectifs.

A cet effet, et selon un premier aspect, l'invention propose un panneau d'habillage pour un véhicule automobile, ledit panneau comprenant une âme, ladite âme présentant une face d'endroit revêtue d'un revêtement d'endroit collé et une face d'envers revêtue d'un revêtement d'envers collé, lesdites faces étant reliées entre elles par une tranche, ledit panneau présentant en outre les caractéristiques suivantes :
- ladite face d'envers est pourvue d'une gorge sur au moins une partie de sa périphérie,
- ledit revêtement d'envers présente une première bordure périphérique s'étendant de part et d'autre de ladite gorge en s'insérant dedans et en épousant la géométrie de ladite gorge,
- ledit revêtement d'endroit présente une deuxième bordure périphérique repliée contre ladite face d'envers, de manière à revêtir ladite tranche et ladite première bordure périphérique, le bord libre de ladite deuxième bordure étant inséré dans ladite gorge de manière à être masqué.

Avec l'agencement proposé, la deuxième bordure revêtant la première bordure et le bord libre de ladite deuxième bordure étant inséré dans la gorge, on obtient une finition périphérique particulièrement esthétique.

En outre, une telle insertion du bord libre dans la gorge le rend difficilement accessibles et décollable par un doigt d'utilisateur ou un objet.

Selon un deuxième aspect, l'invention propose un procédé de réalisation d'un tel panneau.

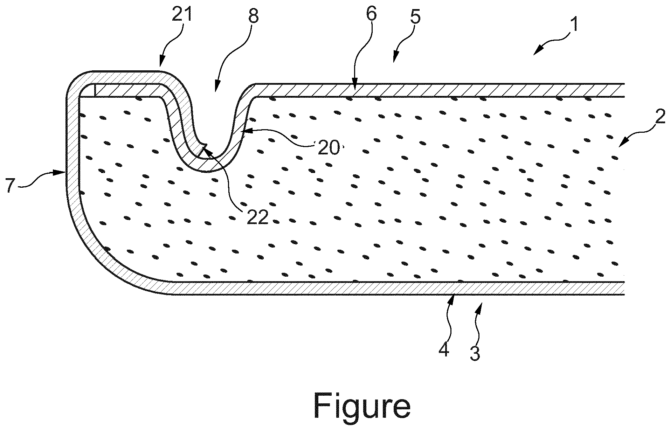

D'autres particularités et avantages de l'invention apparaîtront dans la description qui suit, faite en référence à la figure jointe qui est une vue partielle schématique en coupe d'un panneau selon une réalisation.

En référence aux figures, on décrit un panneau 1 d'habillage pour un véhicule automobile, ledit panneau comprenant une âme 2 - notamment à base de mousse de polyuréthanne sensiblement rigide -, ladite âme présentant une face d'endroit 3 revêtue d'un revêtement d'endroit 4 collé, par exemple en textile, et une face d'envers 5 revêtue d'un revêtement d'envers 6 collé, par exemple en non tissé, lesdites faces étant reliées entre elles par une tranche 7, ledit panneau présentant en outre les caractéristiques suivantes :
- ladite face d'envers est pourvue d'une gorge 8 sur au moins une partie de sa périphérie,
- ledit revêtement d'envers présente une première bordure périphérique 20 s'étendant de part et d'autre de ladite gorge en s'insérant dedans et en épousant la géométrie de ladite gorge,
- ledit revêtement d'endroit présente une deuxième bordure 21 périphérique repliée contre ladite face d'envers, de manière à revêtir ladite tranche et une partie de ladite première bordure périphérique, le bord libre 22 de ladite deuxième bordure étant inséré dans ladite gorge de manière à être masqué.

Selon une réalisation, la largeur de l'ouverture de la gorge 8 est comprise entre 3 et 10 mm.

Selon une réalisation, la profondeur de la gorge 8 est comprise entre 5 et 15 mm.

On décrit à présent un procédé de réalisation d'un panneau 1, ledit procédé comprenant les étapes suivantes :
- réaliser par moulage une âme 2, notamment à base de mousse de polyuréthanne sensiblement rigide, la face d'envers 5 de ladite âme étant pourvue d'une gorge 8 sur au moins une partie de sa périphérie,
- coller sur ladite face d'envers un revêtement d'envers 6 présentant une première bordure périphérique 20 s'étendant de part et d'autre de ladite gorge en s'insérant dedans et en épousant la géométrie de ladite gorge,
- coller sur la face d'endroit 3 de ladite âme un revêtement d'endroit 4 présentant une deuxième bordure périphérique 21 repliée contre ladite face d'envers de manière à revêtir ladite tranche et une partie de ladite première bordure en y étant associée par collage, le bord libre 22 de ladite première bordure étant inséré dans ladite gorge de manière à être masqué.

Selon une réalisation, le collage se fait par l'intermédiaire d'un film fusible - par exemple de type co-polyamide.

Le collage du revêtement d'endroit 4 se fait notamment selon une première étape de collage contre la face d'endroit 3 et la tranche 7, une deuxième étape consistant à replier ledit revêtement d'endroit et à réaliser son collage contre le revêtement d'envers 6.

## Revendications

1. Panneau (1) d'habillage pour un véhicule automobile, ledit panneau comprenant une âme (2), ladite âme présentant une face d'endroit (3) revêtue d'un revêtement d'endroit (4) collé et une face d'envers (5) revêtue d'un revêtement d'envers (6) collé, lesdites faces étant reliées entre elles par une tranche (7), et ladite face d'envers est pourvue d'une gorge (8) sur au moins une partie de sa périphérie, ledit panneau étant caractérisé en ce quel
ledit revêtement d'envers présente une première bordure périphérique (20) s'étendant de part et d'autre de ladite gorge en s'insérant dedans et en épousant la géométrie de ladite gorge,
• ledit revêtement d'endroit présente une deuxième bordure (21) périphérique repliée contre ladite face d'envers, de manière à revêtir ladite tranche et une partie de ladite première bordure périphérique, le bord libre (22) de ladite deuxième bordure étant inséré dans ladite gorge de manière à être masqué.

2. Panneau selon la revendication 1, **caractérisé en ce que** la largeur de l'ouverture de la gorge (8) est comprise entre 3 et 10 mm.

3. Panneau selon l'une des revendications 1 ou 2, **caractérisé en ce que** la profondeur de la gorge (8) est comprise entre 5 et 15 mm.

4. Procédé de réalisation d'un panneau selon l'une quelconque des revendications 1 à 3, où il comprend une étape de
• réaliser par moulage une âme (2), la face d'envers (5) de ladite âme étant pourvue d'une gorge (8) sur au moins une partie de sa périphérie, **caractérisé en ce qu'**il comprend en outre les étapes suivantes:
coller sur ladite face d'envers un revêtement d'envers (6) présentant une première bordure périphérique (20) s'étendant de part et d'autre de ladite gorge en s'insérant dedans et en épousant la géométrie de ladite gorge,
• coller sur la face d'endroit (3) de ladite âme un revêtement d'endroit (4) présentant une deuxième bordure périphérique (21) repliée contre ladite face d'envers de manière à revêtir ladite tranche et une partie de ladite première bordure en y étant associée par collage, le bord libre (22) de ladite première bordure étant inséré dans ladite gorge de manière à être masqué.

## Patentansprüche

1. Verkleidungspaneel (1) für ein Kraftfahrzeug, wobei das Paneel einen Kern (2) umfasst, wobei der Kern eine Vorderseite (3) aufweist, die mit einer geklebten Vorderschicht (4) beschichtet ist, und eine Rückseite (5), die mit einer geklebten Rückschicht (6) beschichtet ist, wobei die Seiten durch einen Abschnitt (7) miteinander verbunden sind, und
die Rückseite auf wenigstens einem Teil ihres Umfangs mit einer Kehle (8) versehen ist,
wobei das Paneel **dadurch gekennzeichnet ist, dass** die Rückschicht einen ersten Umfangsrand (20) aufweist, der sich beidseits der Kehle erstreckt, indem er sich in dieselbe einfügt und die Geometrie der Kehle übernimmt,
- die Vorderschicht einen zweiten Umfangsrand (21) aufweist, der gegen die Rückseite umgebogen ist, sodass er den Abschnitt und einen Teil des ersten Umfangsrands beschichtet, wobei die freie Kante (22) des zweiten Randes in die Kehle eingefügt ist, sodass sie verborgen ist.

2. Paneel nach Anspruch 1, **dadurch gekennzeichnet, dass** die Breite der Öffnung der Kehle (8) im Bereich zwischen 3 und 10 mm beträgt.

3. Paneel nach einem der Ansprüche 1 oder 2, **dadurch gekennzeichnet, dass** die Tiefe der Kehle (8) im Bereich zwischen 5 und 15 mm beträgt.

4. Verfahren zur Herstellung eines Paneels nach einem der Ansprüche 1 bis 3, wobei es einen Schritt umfasst des
- Herstellen eines Kerns (2) durch Gießen, wobei die Rückseite (5) des Kerns auf wenigstens einem Teil ihres Umfangs mit einer Kehle (8) versehen ist,
**dadurch gekennzeichnet, dass** es weiter die folgenden Schritte umfasst:
- Aufkleben, auf die Rückseite, einer Rückschicht (6), die einen ersten Umfangsrand (20) aufweist, der sich beidseits der Kehle erstreckt, indem er sich in dieselbe einfügt und indem er die Geometrie der Kehle übernimmt,
- Aufkleben, auf die Vorderseite (3) des Kerns, einer Vorderschicht (4), die einen zweiten Umfangsrand (21) aufweist, der gegen die Rückseite umgebogen ist, sodass er den Abschnitt und einen Teil des ersten Rands beschichtet, indem er dort durch Kleben verbunden ist, wobei die freie Kante (22) des ersten Rands in die Kehle eingefügt ist, so dass sie verborgen ist.

## Claims

1. Cladding panel (1) for a motor vehicle, said panel comprising a core (2), said core having a front face (3) clad with an adhesively bonded front covering (4) and a reverse face (5) clad with an adhesively bonded reverse covering (6), said faces being connected together by an edge (7) and
said reverse face is provided with a groove (8) over at least part of its periphery,
said panel being **characterised in that**
said reverse covering has a first peripheral border (20) extending on either side of said groove and inserted therein and following the geometry of said groove,
- said front covering has a second peripheral border (21) folded against said rear face, so as to cover said edge and part of said peripheral border, the free edge (22) of said second border being inserted in said groove so as to be concealed.

2. Panel according to claim 1, **characterised in that** the width of the opening of the groove (8) is between 3 and 10 mm.

3. Panel according to either claim 1 or claim 2, **characterised in that** the depth of the groove (8) is between 5 and 15 mm.

4. Method for producing a panel according to any of claims 1 to 3, wherein it comprises a step of
- producing a core (2) by moulding, the rear face (5) of said core being provided with a groove (8) over at least part of its periphery,
**characterised in that** it further comprises the following steps:
- bonding to said rear face a rear covering (6) having a first peripheral border (20) extending on either side of said groove and inserted therein and following the geometry of said groove,
- bonding to the front face (3) of said core a front covering (4) having a second peripheral border (21) folded against said front face so as to cover said edge and part of said first border, being associated therewith by adhesive bonding, the free edge (22) of said first border being inserted in said groove so as to be concealed.
